(19) Europäisches Patentamt / European Patent Office / Office européen des brevets

(11) **EP 1 207 057 B1**

(12) **FASCICULE DE BREVET EUROPEEN**

(45) Date de publication et mention
de la délivrance du brevet:
**31.01.2007  Bulletin 2007/05**

(51) Int Cl.:
*B60C 11/11* *(2006.01)*     *B60C 11/12* *(2006.01)*

(21) Numéro de dépôt: **01125686.4**

(22) Date de dépôt: **26.10.2001**

(54) **Sculpture de bande de roulement de pneumatique pour poids lourd**

Reifenauffläche für Lastkraftwagen

Tread pattern for pneumatic tire for trucks

(84) Etats contractants désignés:
**AT BE CH CY DE DK ES FI FR GB GR IE IT LI LU MC NL PT SE TR**

(30) Priorité:  **13.11.2000  FR 0014673**

(43) Date de publication de la demande:
**22.05.2002  Bulletin 2002/21**

(73) Titulaires:
• **Société de Technologie Michelin
63000 Clermont-Ferrand Cedex 09 (FR)**
• **MICHELIN Recherche et Technique S.A.
1763 Granges-Paccot (CH)**

(72) Inventeurs:
• **Radulescu, Robert
63170 Perignat les Sarlieve (FR)**
• **Zerlauth, Pierre
63119 Chateaugay (FR)**

(74) Mandataire: **Diernaz, Christian
Michelin & Cie
Service SGD/LG/PI-LAD
63040 Clermont-Ferrand Cedex 09 (FR)**

(56) Documents cités:
DE-A- 3 913 450          GB-A- 546 975
US-A- 4 664 166          US-A- 5 048 583
US-A- 6 026 875

## Description

L'invention est relative aux sculptures de bande de roulement pour pneumatiques et plus particulièrement aux bandes de roulement de pneumatiques présentant un sens de roulage préférentiel et destinés notamment pour l'équipement de véhicules poids lourd.

L'expérience montre que pour des bandes de roulement de pneumatiques à carcasse radiale pour poids lourd comportant une pluralité de blocs délimités par des rainures d'orientation générale circonférentielle et transversale, ces blocs subissent une usure en dent de scie (usure dite irrégulière en ce sens qu'elle se développe préférentiellement au voisinage d'un bord desdits blocs). Ce type d'usure est particulièrement important sur les bandes de roulement des pneumatiques montés sur les essieux moteur du véhicule que ce soit en montage simple ou jumelé. Par définition, un bloc de sculpture comprend une face supérieure destinée à venir en contact avec la chaussée pendant le roulage du pneumatique et des faces latérales délimitant les rainures ; chaque intersection d'une face latérale avec la face supérieure formant une arête. Le bord du bloc entrant le premier dans la zone de contact est dit le bord d'attaque : ce bord peut être constitué par une ou plusieurs arêtes, la ou les face(s) latérale(s) limitée(s) par ces arêtes formant la paroi d'attaque. Le bord du bloc sortant le dernier de la zone de contact est dit le bord de fuite et la face latérale à laquelle il appartient est dite la paroi de fuite du bloc.

L'usure irrégulière (en dent de scie) dont il est ici question se manifeste par une usure plus importante localisée sur la face de contact au voisinage du bord de fuite.

Pour réduire cette usure irrégulière en dent de scie constatée pour des pneumatiques équipant en particulier les essieux moteur d'un véhicule poids lourd, il a été proposé dans le brevet européen **EP 0485778** une sculpture de bande de roulement comportant une pluralité de blocs séparés les uns des autres par des rainures d'orientation longitudinale et transversale. Une variante d'exécution présentée dans ce brevet consiste à prévoir que les faces des blocs délimitées par les rainures transversales forment avec une direction perpendiculaire à la surface de roulement des angles différents (positif pour la paroi d'attaque, négatif - en contre dépouille - sur la paroi de fuite).

La demanderesse a fait le constat qu'un angle de dépouille positif sur la paroi d'attaque était favorable sur l'usure irrégulière et principalement sur l'évolution de cette usure car, bien qu'apparaisse dès les premiers kilomètres une usure légèrement plus prononcée sur le bord de fuite, l'usure est ensuite très régulière sur l'ensemble du bloc alors que pour des sculptures n'ayant pas de dépouille dissymétrique entre paroi d'attaque et paroi de fuite l'usure est irrégulière c'est-à-dire qu'elle est plus prononcée sur le bord de fuite que sur le bord d'attaque dès les premiers kilomètres et que cette différence d'usure s'accentue fortement au fur et à mesure de l'utilisation du pneumatique.

La mise en oeuvre d'une telle solution avec des angles de dépouilles au moins égaux à 10° conduit à une réduction sensible du volume disponible dans chaque rainure pour évacuer l'eau dans le cas d'un roulage par temps de pluie ou sur sol recouvert de neige. De plus, un angle de dépouille supérieur ou égal à 10° conduit à une réduction de la largeur de la rainure sur la surface de roulement de la bande au fur et à mesure de l'usure de celle-ci.

La présente invention vise à réaliser une bande de roulement pour enveloppe de pneumatique à carcasse radiale destiné à équiper un essieu moteur d'un véhicule poids lourd qui réduit la différence d'usure entre le bord d'attaque et le bord de fuite tout en conservant un volume maximal de rainure. La présente invention vise aussi un pneumatique à armature de carcasse radiale pour poids lourd et comprenant une bande de roulement conforme à l'invention.

La bande de roulement selon l'invention comprend une pluralité d'éléments de sculpture, certains de ces éléments de sculpture formant des blocs délimités par des découpures d'orientation générale longitudinale et des découpures d'orientation générale transversale, chaque bloc ayant une face supérieure de contact et des faces latérales, l'intersection de chaque face latérale avec la face supérieure formant une arête, la ou les arêtes rentrant les premières dans le contact formant le bord d'attaque de l'élément, la ou les arêtes sortant les dernières du contact formant le bord de fuite du bloc. La face ou les faces latérales coupant la face supérieure de contact selon le bord d'attaque constituant la ou les faces dite(s) d'attaque ; la face ou les faces latérales coupant la face supérieure de contact selon le bord de fuite constituant la ou les faces dite(s) de fuite. Une pluralité de blocs ont leur face d'attaque faisant un angle de dépouille au plus égal à 5°, cet angle correspondant à l'angle que fait la face d'attaque avec une perpendiculaire à la face de contact à l'état neuf et il est positif lorsque les points de cette face les plus à l'intérieur de l'épaisseur de la bande de roulement sont, dans la direction longitudinale, en avant des points de la même face sur le bord d'attaque à l'état neuf.

De plus, chaque bloc dont la face d'attaque présente un angle de dépouille au maximum égal à 5° est pourvu d'une pluralité de puits débouchant sur la face de contact dudit bloc, la direction moyenne de chaque puits faisant un angle $\beta_i$ au moins égal à 10° avec une perpendiculaire à la surface de contact desdits blocs, les puits ayant des sections moyennes comprises entre 0.2 et 12 mm²; les puits étant disposés sur au moins une ligne orientée transversalement par rapport à chaque bloc.

Préférentiellement la profondeur des puits est au moins égale à 50% de l'épaisseur des blocs de façon à ce que l'effet bénéfique sur l'usure soit maintenu pendant une grande partie de la durée de l'utilisation de la bande de roulement.

Par puits, on entend un trou de petite section débouchant sur la face de contact et s'étendant sur au moins une partie de l'épaisseur de chaque bloc voire sur au moins 50% de l'épaisseur dudit bloc ; ces puits peuvent notamment être réalisés au moment du moulage de la bande au moyen d'éléments moulants montés sur le moule de ladite bande.

La ligne moyenne d'un puits s'entend de la ligne droite passant par le barycentre de la section transversale de ce puits sur la surface de roulement à l'état neuf de la bande de roulement et par le barycentre de la section transversale de ce même puits sur la surface de roulement après usure de la bande correspondant à 90% de la profondeur du puits.

Avantageusement, et suivant des dispositions préférentielles :

- chaque puits a une section circulaire de diamètre compris entre 1.5 mm et 2.5 mm (ou de section non circulaire équivalente) pour éviter tout risque d'arrachement de matière au cours du roulage ;

- l'écart angulaire minimum entre l'orientation des puits et celle de la face d'attaque des blocs est au moins égal à 10° ;

- les blocs présentent sur leur face d'attaque des angles de dépouille nuls (la face d'attaque est perpendiculaire à la face de contact du bloc) ;

- les puits ont des tracés en zigzag ou ondulés autour de leur ligne moyenne ;

- les puits d'un bloc sont répartis dans la largeur du bloc sur plusieurs lignes sensiblement parallèles entre elles, lesdits puits étant disposés en quinconce d'une ligne à l'autre ;

- l'angle que fait la ligne moyenne d'un puits est d'autant plus grand que le puits est plus proche de la face d'attaque ;

- le volume total des puits est compris entre 0.1% et 5% du volume total du bloc sans lesdits puits (les valeurs extrêmes étant incluses) ;

- le volume des puits contenu entre un plan passant par le barycentre de la face de contact, ce plan étant perpendiculaire à la face de contact et la face d'attaque est supérieur au volume des puits entre ce même plan et la face de fuite.

Avantageusement au moins certains des blocs la bande de roulement selon l'invention peuvent comporter, en plus d'une première pluralité de puits telle que décrite, une deuxième pluralité de puits dont la direction moyenne fait un angle $\gamma_i$ au moins égal à : 10° avec une perpendiculaire à la surface de contact desdits blocs, les puits ayant des sections moyennes comprises entre 0.2 et 12 mm$^2$. L'orientation choisie pour chacun des puits de la deuxième pluralité fait que ces puits ont tendance, dans l'épaisseur du bloc, à s'écarter d'un plan moyen du bloc passant par le barycentre de la face de contact dudit bloc.

Chaque puits de la deuxième pluralité de puits est préférentiellement réalisé débouchant sur la partie de la face de contact comprise entre un plan perpendiculaire à la face de contact et passant par le barycentre de la face de contact et la face de fuite. Cette deuxième pluralité de puits ayant un effet bénéfique, non sur l'usure irrégulière, mais sur la vitesse moyenne d'usure du bloc que l'on évalue comme le rapport de la quantité de gomme usée pour un kilométrage donné.

Avantageusement cette deuxième pluralité de puits est réalisée de manière symétrique de la première pluralité de puits de la sculpture selon l'invention.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre vue en plan d'une sculpture de bande de roulement selon l'invention ;

La figure 2 montre une vue en coupe II-II dans l'épaisseur d'un bloc de la figure 1 ;

La figure 3 montre une vue en coupe III-III dans l'épaisseur d'un deuxième bloc de la figure 1 ;

La figure 4 montre une vue en coupe IV-IV dans l'épaisseur d'un troisième bloc de la figure 1 ;

La figure 5 montre en coupe un bloc selon l'état de la technique ;

La figure 6 montre une autre variante d'un bloc selon l'invention comprenant une première et une deuxième pluralité de puits ;

La figure 7 montre une vue en coupe selon VII-VII du bloc de la figure 6.

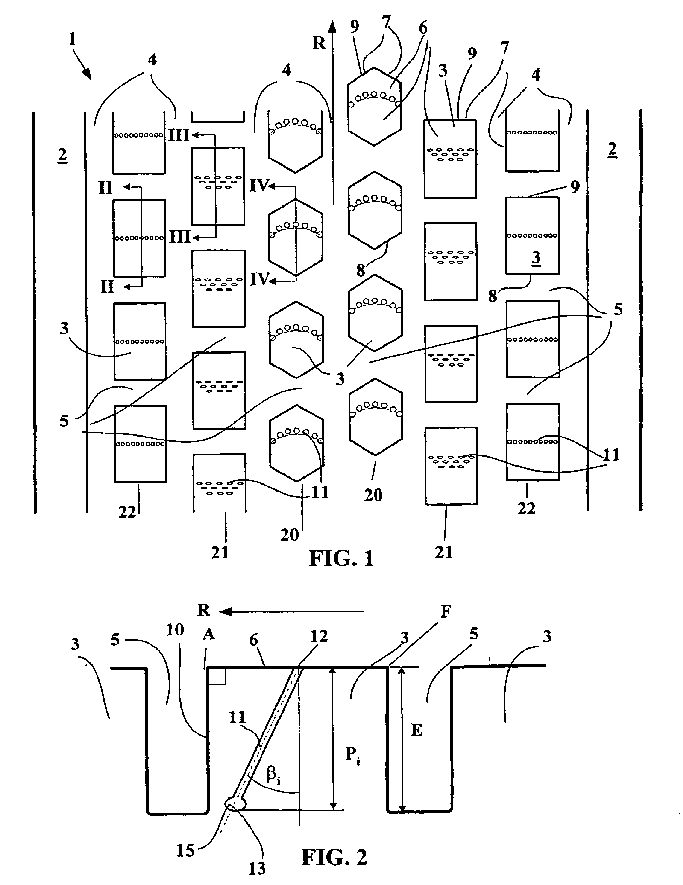

Par souci de simplification dans les figures 1 à 7 les mêmes références ont été employées pour désigner des éléments identiques ou de même nature.

La bande de roulement 1 montrée sur la figure 1, comprend deux nervures longitudinales 2 disposées sur les bords de cette bande et six rangées de blocs délimitées par des rainures d'orientations générales longitudinale 4 et transversale 5. Les bloc 3s des deux rangées médianes 20 ont des surfaces de contact 6 de forme polygonale à six cotés, tandis que les blocs 3 des autres rangées 21, 22 ont des formes rectangulaires. La vue représentée à la figure 1 est davantage une vue synthétique de ce que permet l'invention plutôt que la vue d'une seule variante préférentielle, ce qui signifie qu'une disposition particulière peut être employée seule ou en combinaison avec au moins une autre disposition décrite ; par disposition, on entend chacune des variantes décrites avec le support des figures 2, 3 et 4 correspondant aux vues en coupe dans l'épaisseur des blocs des différentes rangées.

La flèche R indique le sens de roulage préférentiel.

Chacun des blocs 3 est délimité par des rainures 4 d'orientations longitudinales (c'est-à-dire circonférentielles sur le pneumatique équipé avec cette bande) de forme générale rectiligne et des rainures transversales 5 débouchant dans les rainures longitudinales 4. La face supérieure de contact 6 de chacun des blocs 3, visible sur la figure 1 et destinée à venir en contact avec la chaussée pendant le roulage, est limitée par des arêtes 7. L'arête venant la première en contact avec la chaussée pendant le roulage constitue le bord d'attaque 9 du bloc puisqu'elle est la première des arêtes dudit bloc à venir en contact avec; l'arête opposée longitudinalement à cette arête d'attaque correspond à la dernière partie de la face de contact 6 à sortir du contact et forme le bord de fuite 8 du bloc 3. La face latérale du bloc 3 coupant la face de contact 6 selon le bord d'attaque 9 constitue la face dite d'attaque tandis que la face latérale du bloc 3 coupant la face de contact 6 selon le bord de fuite 8 constitue la face dite de fuite.

Dans le cas particulier des blocs des rangées centrales, le bord d'attaque comprend les deux arêtes formant la pointe avant de chacun de ces blocs.

Sur la figure 2, on voit en coupe selon la ligne II-II sur la figure 1, un bloc 3 des rangées 22 proches des nervures 2 et délimité par des rainures transversales 5 ; ce bloc 3 a sa face d'attaque 10 qui est perpendiculaire à la face de contact 6 dudit bloc. Ce bloc 3 comprend une pluralité de puits 11 de forme sensiblement cylindrique de diamètre égal à 2.5 mm (d'axe s'étendant entre des points repérés 12 et 13, le point 12 étant situé sur la face de contact 6 et le point 13 étant à l'intérieur du bloc) et de profondeur Pi égale à 24 mm (sensiblement égale à la profondeur E des rainures transversales séparant deux blocs 3 desdites rangées 22), ces puits 11 étant disposés de manière à être dans un même plan incliné par rapport à un plan perpendiculaire à la face de contact d'un angle $\beta_i$ positif (c'est-à-dire dans un plan incliné de manière à ce que les points dudit plan sur la surface de contact du bloc soient plus éloignés de la face d'attaque que les points les plus à l'intérieur dudit bloc). Le fond du puits se termine par une zone élargie 15. Sur cette figure 2 le point A correspond à l'intersection du bord d'attaque avec le plan de la figure et le point F correspond à l'intersection du bord de fuite avec ce même plan.

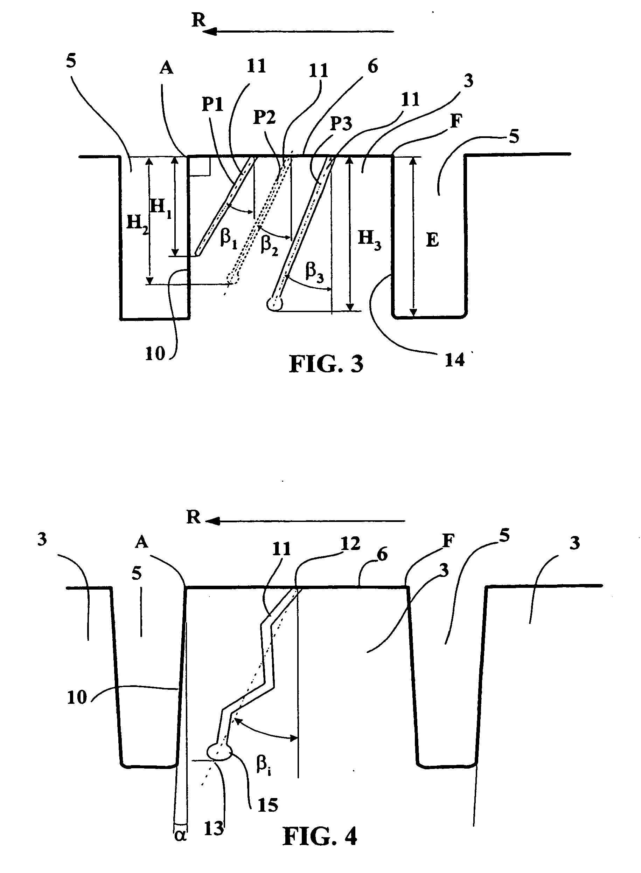

Sur les blocs 3 des rangées intermédiaires 21 tels que montrés en coupe à la figure 3, on a disposés suivant des lignes droites parallèles au bord d'attaque 9 une pluralité de puits 11 dont le contour est de forme sensiblement elliptique. Ces puits 11 sont disposés en quinconce d'une ligne à sa voisine afin de limiter la réduction de rigidité longitudinale créée par la présence du même nombre de puits lorsque ceux-ci sont répartis sur une ligne unique transversale comme c'est le cas de la variante correspondant aux blocs de la rangée 22 proche de la nervure 2 et réduire les risques de déchirure dans la gomme constituant le bloc.

Avantageusement, les puits 11 sont disposés dans trois plans P1, P2, P3 orientés dans la direction transversale du bloc 3, ces plans faisant des angles $\beta_1$, $\beta_2$, $\beta_3$ avec un plan perpendiculaire à la surface de contact du bloc, ces angles satisfaisant la relation suivante :

$$\beta_1 > \beta_2 > \beta_3$$

Le plan P1 est situé entre le plan P2 et la face d'attaque ; le plan P3 est situé entre le plan P2 et la face de fuite.

D'autre part, les profondeurs respectives H1, H2, H3 des puits situés respectivement sur les plans P1, P2, P3 satisfont la relation suivante :

$$H1 < H2 < H3$$

et

$$H3 = E$$

où E est la profondeur des rainures transversales délimitant le bloc.

Sur la figure 4, montrant une coupe d'un bloc 3 des rangées médianes 20 suivant la ligne IV-IV, on distingue un puits 11 dont la ligne moyenne fait un angle $\beta_i$ avec une perpendiculaire à la face de contact. La face d'attaque 10 présente un angle de dépouille $\alpha$ ici égal à 3°. Le tracé de chaque puits 11 a une forme en zigzag autour d'une ligne moyenne passant par les points repérés 12 et 13, le point 12 correspondant au barycentre de la section transversale du puits sur la face de contact 6 à l'état neuf et le point 13 correspondant au point du puits le plus à l'intérieur du bloc 3.

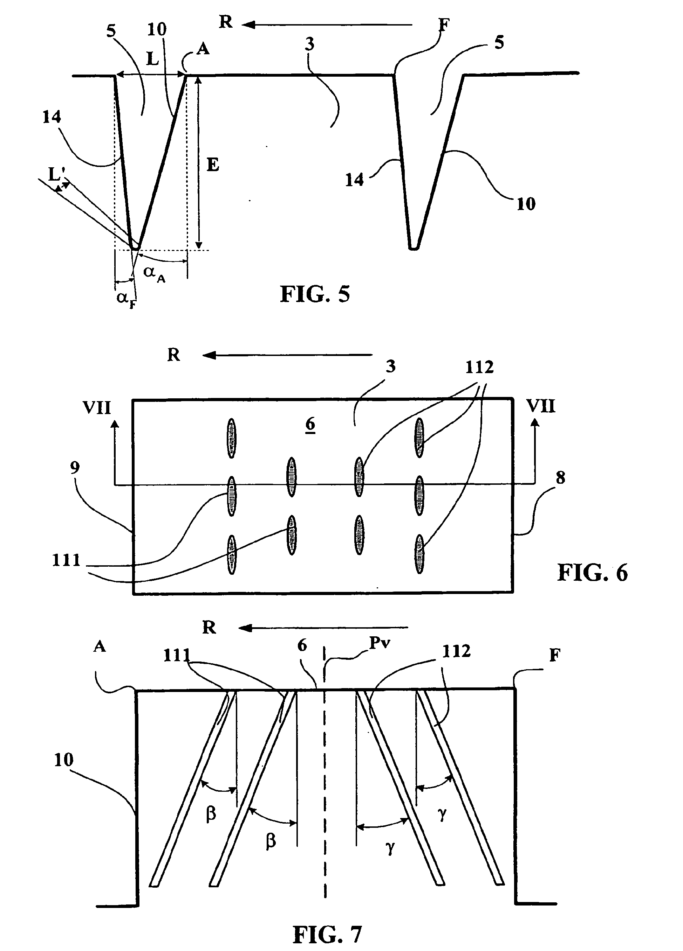

Dans les trois exemples décrits avec les figures 2, 3 et 4, le volume des rainures transversales est très largement supérieur à ce que l'on obtient avec une solution de l'état de la technique comme représentée sur la figure 5 selon laquelle deux blocs de sculpture délimitent, l'un avec sa face d'attaque 10 faisant un angle de dépouille $\alpha_A$ de 15° et l'autre avec sa face de fuite 14 faisant un angle de dépouille $\alpha_F$ de 5°, une rainure 5 de profondeur E et dont la largeur décroît très sensiblement avec la profondeur (cette largeur est égale à L sur la face de contact à l'état neuf et égale à L' au fond de la rainure).

Dans tous les cas présentés, les puits 11 se terminent par des parties élargies 15 afin d'éviter tout problème de cassure en fond de puits.

Sur la figure 6 (montrant la surface de contact d'un bloc) et la figure 7 (montrant une vue en coupe suivant la ligne VII-VII dans l'épaisseur du même bloc), on a représenté une variante d'un bloc 3 selon l'invention comprenant une première et une deuxième pluralité de puits. La première pluralité de puits comprend des puits 111 tous orientés selon un même angle β égal à 22° par rapport à un plan perpendiculaire à la face de contact, tous ces puits 111 débouchant sur la face de contact 6 entre la face d'attaque 10 du bloc 3 et le plan Pv perpendiculaire à la face de contact 6 et passant par le barycentre de ladite face. Cette première pluralité de puits a un effet bénéfique sur l'usure du bloc en réduisant l'usure irrégulière pouvant apparaître sur le bord de fuite en diminuant le risque de son apparition et / ou son amplification si malgré tout elle apparaissait.

La deuxième pluralité de puits comprend des puits 112 disposés selon un motif symétrique de la première pluralité de puits, chacun de ces puits 112 étant orientés selon un angle γ égal et opposé à l'angle β dans la variante décrite. Cette deuxième pluralité de puits a pour fonction de compenser, à l'état neuf, la présence de la première pluralité de puits afin de réduire la vitesse moyenne d'usure régulière du bloc ; par vitesse moyenne d'usure régulière, on entend la perte de matière par usure sur tout le bloc rapportée au nombre de kilomètres parcourus.

Les sections transversales des puits 111, 112 des première et deuxième séries de puits sont suffisamment réduites (et inférieures préférentiellement à 6 mm²) afin d'éviter le plus possible la pénétration d'objets divers, notamment des cailloux, qui pourraient atteindre le fond desdits puits et ensuite agresser la structure interne du pneumatique, comme cela peut être le cas lorsqu'on pourvoit chaque bloc avec des incisions (c'est-à-dire des découpures de largeur sensiblement égale à 0.6 mm et s'étendant sur au moins 50% de la largeur transversale du bloc).

Un autre avantage de cette dernière variante est qu'il n'est pas nécessaire d'affecter un sens particulier de roulage au pneumatique équipé d'une telle bande ayant deux pluralités de puits.

Bien sûr, l'invention n'est pas limitée aux exemples décrits et représentés et diverses modifications peuvent y être apportées par l'homme du métier sans sortir du cadre des revendications suivantes; de même, cette invention peut être aisément appliquée à tout type de pneumatique et notamment à tout pneumatique présentant des usures irrégulières au cours du roulage.

**Revendications**

1. - Bande de roulement (1) pour pneumatique, cette bande comprenant une pluralité d'éléments de sculpture, certains de ces éléments de sculpture (2, 3) formant des blocs (3) délimités par des découpures d'orientation générale longitudinale (4) et des découpures d'orientation générale transversale (5), chaque bloc (3) ayant une face supérieure de contact (6) et des faces latérales, l'intersection de chaque face latérale avec la face supérieure de contact (6) formant une arête (7), la ou les arêtes rentrant les premières dans le contact formant le bord d'attaque (9) du bloc (3), la ou les arêtes sortant les dernières du contact formant le bord de fuite du bloc (8) ; la face ou les faces latérales coupant la face supérieure de contact (6) selon le bord d'attaque (9) constituant la ou les faces dite(s) d'attaque (10); la face ou les faces latérales coupant la face supérieure de contact selon le bord de fuite constituant la ou les faces dite (s) de fuite ; une pluralité de blocs (3) ayant des faces d'attaque (10) présentant un angle de dépouille au plus égal à 5°, cet angle correspondant à l'angle que fait la face d'attaque (10) avec une perpendiculaire à la face de contact à l'état neuf, cette bande (1) est **caractérisée en ce que** :

   chaque bloc (3) dont la face d'attaque (10) présente un angle de dépouille au maximum égal à 5° est pourvu d'une pluralité de puits (11) débouchant sur la face de contact dudit bloc, la direction moyenne de chaque puits (11) faisant un angle $\beta_i$ au moins égal à 10° avec une perpendiculaire à la surface de contact (6) desdits blocs (3), les puits (11) ayant des sections moyennes comprises entre 0.2 et 12 mm².

2. - Bande de roulement (1) selon la revendication 1 **caractérisée en ce que** certains des puits (11) ont des surfaces de section équivalentes à des surfaces circulaires de diamètre au moins égal à 1.5 mm et au plus égal à 2.5 mm.

3. - Bande de roulement (1) selon l'une des revendications 1 ou 2 **caractérisée en ce que** l'écart angulaire minimum entre l'orientation des puits (11) et celle de la face d'attaque (10) des blocs (3) est au moins égal à 10°.

4. - Bande de roulement (1) selon l'une des revendications 1 à 3 **caractérisée en ce que** les puits (11) d'au moins un bloc (3) sont répartis dans la largeur dudit bloc sur plusieurs lignes sensiblement parallèles entre elles, lesdits puits (11) étant disposés en quinconce d'une ligne à l'autre.

5. - Bande de roulement (1) selon l'une des revendications 1 à 4 **caractérisée en ce que** le volume total des puits (11) est compris entre 0.1% et 5% du volume total du bloc.

**6.** - Bande de roulement (1) selon l'une des revendications 1 à 4 **caractérisée en ce qu**'au moins certains des blocs (3) comprennent une autre pluralité de puits (112) dont la direction moyenne fait un angle $\gamma_i$ au moins égal à 10° avec une perpendiculaire à la face de contact (6) desdits blocs, le signe de l'angle $\gamma_i$ étant opposé au signe de l'angle $\beta_i$, les puits (112) ayant des sections moyennes comprises entre 0.2 et 12 mm$^2$.

**7.** - Bande de roulement (1) selon l'une des revendications 1 à 6 **caractérisée en ce que** les puits (11, 111, 112) d'au moins un bloc (3) ont des profondeurs mesurées perpendiculairement à la face de contact à l'état neuf au moins égales à 50% de la profondeur E des rainures transversales (5).

**8.** - Bande de roulement (1) selon l'une des revendications 1 à 7 **caractérisée en ce que** les puits (11, 111, 112) ont des tracés en zigzag ou ondulés dans l'épaisseur de la bande de roulement.

**9.** - Bande de roulement (1) selon l'une des revendications 1 à 8 **caractérisée en ce que** l'angle de dépouille de la face d'attaque (10) est nul.

**10.** - Pneumatique pourvu d'une bande de roulement (1) selon l'une des revendications 1 à 9 et **caractérisée en ce qu**'il est destiné à équiper un essieu moteur d'un véhicule poids lourd.

## Claims

**1.** A tread (1) for a tyre, this tread comprising a plurality of tread pattern elements, some of these tread pattern elements (2, 3) forming blocks (3) which are defined by cutouts of longitudinal general orientation (4) and cutouts of transverse general orientation (5), each block (3) having an upper contact face (6) and lateral faces, the intersection of each lateral face with the upper contact face (6) forming a ridge (7), the ridge(s) which is (are) first to come into contact forming the leading edge (9) of the block (3), the ridge(s) which is (are) last to emerge from the contact forming the trailing edge of the block (8); the lateral face or faces intersecting the upper contact face (6) along the leading edge (9) constituting what is (are) called the leading face(s) (10); the lateral face or faces intersecting the upper contact face along the trailing edge constituting what is (are) called the trailing face (s); a plurality of blocks (3) having leading faces (10) having a taper angle at most equal to 5°, this angle corresponding to the angle formed by the leading face (10) with a line perpendicular to the contact face when new, this tread (1) is **characterised in that**:

each block (3), the leading face (10) of which has a taper angle of at most 5°, is provided with a plurality of wells (11) opening on to the contact face of said block, the average direction of each well (11) forming an angle $\beta_i$ at least equal to 10° with a line perpendicular to the contact surface (6) of said blocks (3), the wells (11) having average sections of between 0.2 and 12 mm$^2$.

**2.** A tread (1) according to Claim 1, **characterised in that** some of the wells (11) have surfaces of section which are equivalent to circular surfaces of a diameter at least equal to 1.5 mm and at most equal to 2.5 mm.

**3.** A tread (1) according to one of Claims 1 or 2, **characterised in that** the minimum angular deviation between the orientation of the wells (11) and that of the leading face (10) of the blocks (3) is at least equal to 10°.

**4.** A tread (1) according to one of Claims 1 to 3, **characterised in that** the wells (11) of at least one block (3) are distributed within the width of said block over a plurality of lines substantially parallel to each other, said wells (11) being arranged in a staggered configuration from one line to the other.

**5.** A tread (1) according to one of Claims 1 to 4, **characterised in that** the total volume of the wells (11) is between 0.1% and 5% of the total volume of the block.

**6.** A tread (1) according to one of Claims 1 to 4, **characterised in that** at least some of the blocks (3) comprise another plurality of wells (112), the average direction of which forms an angle $\gamma_i$ at least equal to 10° with a line perpendicular to the contact face (6) of said blocks, the sign of the angle $\gamma_i$ being opposed to the sign of the angle $\beta_i$, the wells (112) having average sections of between 0.2 and 12 mm$^2$.

**7.** A tread (1) according to one of Claims 1 to 6, **characterised in that** the wells (11, 111, 112) of at least one block (3) have depths measured perpendicular to the contact face when new at least equal to 50% of the depth E of the transverse grooves (5).

**8.** A tread (1) according to one of Claims 1 to 7, **characterised in that** the wells (11, 111, 112) have zigzag or undulating traces within the thickness of the tread.

**9.** A tread (1) according to one of Claims 1 to 8, **characterised in that** the taper angle of the leading face (10) is zero.

**10.** A tyre provided with a tread (1) according to one of Claims 1 to 9 and **characterised in that** it is intended to be fitted on a driving axle of a heavy vehicle.

**Patentansprüche**

1. Laufstreifen (1) für Luftreifen, wobei der Laufstreifen eine Vielzahl von Profilelementen aufweist, verschiedene Profilelemente (2, 3) Blöcke (3) bilden, die durch Einschnitte von allgemeiner Längsorientierung (4) und durch Einschnitte von allgemeiner Querorientierung (5) begrenzt sind, jeder Block (3) eine obere Kontaktfläche (6) und Seitenflächen aufweist, die Schnittlinie jeder Seitenfläche mit der oberen Kontaktfläche (6) eine Kante (7) bildet, wobei die Kante(n), die als erste in den Kontaktbereich eintreten, den vorderen Rand (9) des Blocks (3) bilden, die Kante(n), die als letzte die Kontaktzone verlassen, den hinteren Rand (8) bilden, die Seitenfläche(n), die die obere Kontaktfläche (6) entlang des vorderen Rands (9) schneiden, die so genannte(n) Vorderseite(n) (10) bilden, und die Seitenfläche(n), die die obere Kontaktfläche entlang des hinteren Rands schneiden, die so genannte(n) Hinterseite(n) bilden; eine Vielzahl von Blöcken (6) Vorderseiten (10) aufweisen, die einen Steigungswinkel von höchstens 5° aufweisen, wobei dieser Winkel dem Winkel entspricht, den die Vorderseite (10) mit einer senkrechten Linie zur Kontaktfläche im Neuzustand ausbildet, wobei der Laufstreifen (1) **dadurch gekennzeichnet ist, dass**:

> jeder Block (3), dessen Vorderseite (10) einen Steigungswinkel von maximal 5° hat, mit einer Vielzahl von Vertiefungen (11) ausgestattet ist, die in die Kontaktfläche dieses Blocks münden, die mittlere Ausrichtung jeder Vertiefung (11) einen Winkel $\beta_i$ von mindestens 10° mit einer senkrechten Linie zur Kontaktfläche (6) dieser Blöcke (3) bildet, und die Vertiefungen (11) mittlere Querschnitte von 0,2 bis 12 $mm^2$ aufweisen.

2. Laufstreifen (1) nach Anspruch 1, **dadurch gekennzeichnet, dass** verschiedene Vertiefungen (11) Querschnittsoberflächen aufweisen, die runden Oberflächen mit einem Durchmesser von mindestens 1,5 mm und höchstens 2,5 mm entsprechen.

3. Laufstreifen (1) nach einem der Ansprüche 1 oder 2, **dadurch gekennzeichnet, dass** der minimale Unterschied des Winkels zwischen der Ausrichtung der Vertiefungen (11) und der Ausrichtung der Vorderseite (10) der Blöcke (3) mindestens 10° ist.

4. Laufstreifen (1) nach einem der Ansprüche 1 bis 3, **dadurch gekennzeichnet, dass** die Vertiefungen (11) mindestens eines Blocks (3) über die Breite des Blocks in mehreren zueinander in etwa parallelen Linien verteilt sind, wobei die Vertiefungen (11) von einer Linie zur anderen versetzt angebracht sind.

5. Laufstreifen (1) nach einem der Ansprüche 1 bis 4, **dadurch gekennzeichnet, dass** das Gesamtvolumen der Vertiefungen (11) im Bereich von 0,1 bis 5 % des Gesamtvolumens des Blocks liegt.

6. Laufstreifen (1) nach einem der Ansprüche 1 bis 4, **dadurch gekennzeichnet, dass** zumindest einige der Blöcke (3) eine andere Vielzahl von Vertiefungen (112) aufweisen, deren mittlere Ausrichtung mit einer senkrechten Linie zur Kontaktfläche 6 dieser Blöcke einen Winkel $\gamma_i$ von mindestens 10° bildet, wobei das Vorzeichen des Winkels $\gamma_i$ entgegengesetzt dem Vorzeichen des Winkels $\beta_i$ ist, und die Vertiefungen (112) mittlere Querschnitte von 0,2 bis 12 $mm^2$ aufweisen.

7. Laufstreifen (1) nach einem der Ansprüche 1 bis 6, **dadurch gekennzeichnet, dass** die Vertiefungen (11, 111, 112) mindestens eines Blocks (3) Tiefen von mindestens 50 % der Tiefe E der quer laufenden Rillen (5) aufweisen, senkrecht zur Kontaktfläche im Neuzustand gemessen.

8. Laufstreifen (1) nach einem der Ansprüche 1 bis 7, **dadurch gekennzeichnet, dass** die Vertiefungen (11, 111, 112) in der Dicke des Laufstreifens im Zickzack oder gewellt verlaufen.

9. Laufstreifen nach einem der Ansprüche 1 bis 8, **dadurch gekennzeichnet, dass** der Steigungswinkel der Vorderseite (10) Null list.

10. Luftreifen, der mit einem Laufstreifen (1) nach einem der Ansprüche 1 bis 9 ausgestattet ist, **dadurch gekennzeichnet, dass** er dazu vorgesehen ist, eine Antriebsachse eines Lastkraftwagens auszustatten.

**FIG. 1**

**FIG. 2**

**FIG. 3**

**FIG. 4**

**FIG. 5**

**FIG. 6**

**FIG. 7**